# EUROPÄISCHE PATENTANMELDUNG

(11) **EP 2 003 603 A2**
(43) Veröffentlichungstag der Anmeldung: **17.12.2008**
(21) Anmeldenummer: 08010591.9
(22) Anmeldetag: 11.06.2008
(51) Int. Cl.: G06K 19/077

(54) **Transponder, Verfahren zum Betrieb eines Transponders**

(30) Priorität: 12.06.2007 DE 102007027610
(71) Anmelder: ATMEL Germany GmbH, 74072 Heilbronn (DE)
(72) Erfinder: Lepek, Paul, 01465 Dresden (DE)
(74) Vertreter: Koch Müller Patentanwaltsgesellschaft mbH

(57) **Zusammenfassung**

Transponder und Verfahren zum Betrieb eines Transponders, der einen Kondensator (C_{buf}) zur Speicherung von über eine Luftschnittstelle übertragener Energie und eine mit der gespeicherten Energie versorgbare Recheneinheit (10) aufweist,
- bei dem eine Kondensatorspannung (V_{c}) des Kondensators (C_{buf}) mit einer ersten Schwelle (V₁) verglichen wird,
- bei dem die Kondensatorspannung (V_{c}) mit einer zweiten Schwelle (V₂) verglichen wird, wobei sich die erste Schwelle (V₁) und die zweite Schwelle (V₂) unterscheiden,
- bei dem in einem ersten Betriebsmodus (M1), wenn die Kondensatorspannung (V_{c}) oberhalb der ersten Schwelle (V₁) ist, die Recheneinheit (10) eine Anzahl von Routinen mit unterschiedlicher Priorisierung ausführt,
- bei dem in einem zweiten Betriebsmodus (M2), wenn die Kondensatorspannung (V_{c}) zwischen der ersten Schwelle (V₁) und der zweiten Schwelle (V₂) ist, eine Anzahl von Routinen mit niedriger Priorisierung gestoppt und eine Anzahl von Routinen mit hoher Priorisierung fortgeführt werden.

## Beschreibung

Die vorliegende Erfindung betrifft einen Transponder und ein Verfahren zum Betrieb eines Transponders und eine Verwendung für einen Transponder.

Die DE 698 31 711 T2 zeigt eine Transponder-Kommunikationseinrichtung, die zum kontaktlosen Kommunizieren mit einem in einem Empfangsbereich der Transponder-Kommunikationseinrichtung anwesenden Transponder ausgebildet ist. Weiterhin zeigt die DE 698 31 711 T2 einen Transponder, der zum kontaktlosen Kommunizieren mit mindestens einer Transponder-Kommunikationseinrichtung ausgebildet ist und der in einem Aktivzustand zum Kommunizieren mit einer Transponder-Kommunikationseinrichtung aktiviert ist.

Auf eine derartige Transponder-Kommunikationseinrichtung mit einem Transponder wird auch im Dokument US 5,339,073 hingewiesen. Die US 5,339,073 offenbart eine Zugangssteuerungsanlage, die eine Abfrageeinheit enthält, die ein Abfragesignal abgibt, sowie eine Vielzahl von Transpondern, wobei jeder Transponder einen gespeicherten Identitätscode aufweist, der sich von dem der anderen Transponder unterscheidet. Dieser Identitätscode enthält eine Vielzahl von Feldern, die je ein ausgewähltes Införmationsbit festhalten. Das Abfragesignal wird so gesteuert, dass gleichzeitig die Felder aller im Bereich liegender Transponder seriell abgefragt werden. Von jedem beliebigen Transponder, der in dem abgefragten Feld eine Bitübereinstimmung aufweist, die von dem Abfragesignal gefordert wird, wird an die Abfrageeinheit ein Gruppenantwortsignal zurückgesendet. Die Abfrageeinheit ist ausgebildet, aus der Reihe empfangener Antwortsignale die Identität jedes einzelnen gültigen, im Bereich liegenden Transponders zu ermitteln.

Ein weiteres Beispieldokument ist die US 5,345,231, wobei für den Fall, dass sich mehrere Transponder im Empfangsbereich einer bekannten Transponder-Kommunikationseinrichtung befinden, sich das Problem der individuellen Selektion jedes einzelnen der bekannten Transponder ergibt. Dieses individuelle Selektieren kann mit Hilfe von Selektiermitteln einer Transponder-Kommunikationseinrichtung durchgeführt werden.

Aus der US 5,621,412 ist ein System und ein Verfahren bekannt, bei dem Energie beim Betrieb eines Transponders eingespart wird. Dabei wird der Transponder aktiviert oder aufgeweckt in eine Mehrzahl von Stufen. Ein Schwellwertdetektor misst den Energielevel der empfangen RF-Energie. Wenn die RF-Energie eine vorgegebene Schwelle überschreitet, verwendet der Transponder den Modulationsdetektor um zu überprüfen, ob er durch ein gültiges Signal oder durch eine zufällige plötzliche Amplitudenänderung (burst) aufgeweckt wurde. Wenn eine vorgegebene Modulation detektiert worden ist, wird der Transponder vollständig aktiviert zu seinem normalen Betriebszustand.

Ein Verfahren zur Übertragung von Daten zwischen einer Basisstation und einem passiven Transponder ist aus der Druckschrift EP 473 569 B1 bekannt. Hierbei werden mittels einer amplitudenmodulierten Trägerwelle digitale Daten zwischen einer Basisstation und einem passiven Transponder ausgetauscht.

Der Erfindung liegt die Aufgabe zu Grunde, ein Verfahren anzugeben, das die Energieversorgung eines Transponders möglichst verbessert.

Diese Aufgabe wird durch ein Verfahren mit den Merkmalen des unabhängigen Patentanspruchs 1 gelöst. Vorteilhafte Weiterbildungen sind Gegenstand von abhängigen Ansprüchen.

Demzufolge ist ein Verfahren zum Betrieb eines Transponders vorgesehen. Der Transponder weist einen Kondensator zur Speicherung von über eine Luftschnittstelle übertragener Energie und eine mit der gespeicherten Energie versorgbare Recheneinheit auf. Wird der Transponder mit über eine Luftschnittstelle übertragener Energie versorgt, wird ein derartiger Transponder auch als passiver Transponder bezeichnet. Zusätzlich kann der Transponder eine eigene Energieversorgung - wie beispielsweise eine aufladbare oder nicht-aufladbare Batterie - aufweisen.

In dem Verfahren wird eine Kondensatorspannung des Kondensators mit einer ersten Schwelle verglichen. Zum Vergleich kann beispielsweise ein Komparator verwendet werden. Hierzu wird beispielsweise die Spannung des Kondensators abgetastet und analog-digital gewandelt. Alternativ kann auch ein Analogkomparator verwendet werden, der einen kontinuierlichen Vergleich ermöglicht. Weiterhin wird die Kondensatorspannung mit einer zweiten Schwelle verglichen, wobei sich die erste Schwelle und die zweite Schwelle unterscheiden. Auch zum Vergleich der Kondensatorspannung mit der zweiten Schwelle kann beispielsweise ein Komparator verwendet werden. Der Vergleich mit der ersten Schwelle und mit der zweiten Schwelle kann zeitlich disjunkt, vorzugsweise jedoch gleichzeitig erfolgen.

Vorzugsweise führt die Recheneinheit in einem ersten Betriebsmodus eine Anzahl von Routinen mit unterschiedlicher Priorisierung aus. Der erste Betriebsmodus ist dabei definiert, wenn die Kondensatorspannung oberhalb der ersten Schwelle ist. Dabei ist unter der Kondensatorspannung der Betrag zu verstehen, so dass es unerheblich ist, ob die Kondensatorspannung als positive oder negative Spannung betrachtet wird. Der Betriebsmodus wird vorzugsweise von der Recheneinheit festgelegt, indem beispielsweise bestimmte Werte oder Parameter eingestellt werden.

Der Betriebsmodus ist vorzugsweise abhängig von der vorteilhafterweise durch einen Komparator detektierten Kondensatorspannung. Vorzugsweise wird ein der Detektion zugeordnetes oder kodiertes Signal an die Recheneinheit übertragen. Das Signal ist beispielsweise ein Detektions-Status-Flag oder ein Unterbrechungssignal (IRQ - engl. interrupt request). Vorteilhafterweise wird ein innerhalb der Recheneinheit programmiertes Statusregister entsprechend der Detektion innerhalb eines Softwareprogramms aktualisiert. Hierdurch werden vorteilhafterweise eine Nachverfolgung des Betriebsmodus und eine Steuerung von Funktionalitäten der Recheneinheit oder des Transponders ermöglicht.

Vorzugsweise wird in einem zweiten Betriebsmodus eine Anzahl von Routinen mit niedriger Priorisierung gestoppt und eine Anzahl von Routinen mit hoher Priorisierung fortgeführt. Dies erfolgt unter der Bedingung, dass die Kondensatorspannung zwischen der ersten Schwelle und der zweiten Schwelle ist. Vorzugsweise weisen Routinen - beispielsweise Unterbrechungsroutinen (IRQ) - die der zweiten Schwelle zugeordnet sind eine höhere Priorität auf als Routinen, die der ersten Schwell zugeordnet sind. Routinen höherer Priorisierung können beispielweise Unterbrechungen des Programmablaufs vorbelegen, die sonst Routinen niederer Priorisierung zugeordnet sind.

Gemäß einer vorteilhaften Weiterbildung erfolgt in einem dritten Betriebmodus ein Aussetzen (engl. suspend) der Routinen der Recheneinheit. Das Aussetzen erfolgt unter der Bedingung, dass die Kondensatorspannung unterhalb der zweiten Schwelle ist. Dabei sind Registerwerte der Routinen beispielsweise in einem nicht-flüchtigen Speicher (EEPROM, FRAM etc.) gespeichert und die Werte können nach dem Aussetzen wieder in Register eingeladen werden.

In einer bevorzugten Weiterbildung ist vorgesehen, dass zumindest die zuvor ausgesetzten Routinen fortgesetzt werden, wenn die Kondensatorspannung erneut oberhalb der ersten Schwelle oder bereits oberhalb der zweiten Schwelle ist. Wird die Recheneinheit zurückgesetzt, werden zunächst eine Initialisierung gestartet und anschließend die Routinen von ihrem Beginn an abgearbeitet. Hingegen können die ausgesetzten Routinen an einer beliebigen Stellen innerhalb ihres Ablaufs fortgesetzt werden. Vorzugsweise wird zumindest eine der ausgesetzten Routinen an der Stelle innerhalb ihres Ablaufs fortgesetzt, an der sie zuvor ausgesetzt worden ist. Alternativ sind ebenfalls Rücksprünge innerhalb des Ablaufs der jeweiligen Routine möglich. Zum Fortsetzen der Routine wird diese daher nicht neu gestartet oder initialisiert.

In einer anderen Weiterbildung ist vorgesehen, dass ein Unterschreiten und/oder Überschreiten der ersten Schwelle durch die Kondensatorspannung ein erstes Unterbrechungssignal (engl. interrupt request) zur Unterbrechung des Programmablaufs in der Recheinheit auslöst. Hierzu gelangt das Unterbrechungssignal an einen unterbrechungsfähigen Eingang der Recheneinheit. Das Unterbrechungssignal wird beispielsweise als steigende Flanke eines Digitalsignals generiert. In einer wiederum anderen Weiterbildung ist vorgesehen, dass ein Unterschreiten und/oder Überschreiten der zweiten Schwelle durch die Kondensatorspannung ein zweites Unterbrechungssignal zur Unterbrechung des Programmablaufs in der Recheinheit auslöst.

Der Erfindung liegt weiterhin die Aufgabe zu Grunde, eine Verwendung für einen Transponder anzugeben, dessen Energieversorgung möglichst verbessert ist.

Diese Aufgabe wird durch eine Verwendung mit den Merkmalen des unabhängigen Patentanspruchs 6 gelöst. Die Verwendung kann durch Merkmale des Verfahrens oder des Transponders vorteilhaft weitergebildet werden.

Demzufolge ist eine Verwendung von einer ersten Schwelle und einer von der ersten Schwelle verschiedenen zweiten Schwelle zur Überwachung einer Kondensatorspannung eines Kondensators eines Transponders vorgesehen. Der Transponder weist zusätzlich zum Kondensator eine Recheneinheit auf, die mit in dem Kondensator gespeicherter Energie versorgbar ist. Vorzugsweise ist die Recheneinheit zur Reduzierung der Stromaufnahme ausgebildet, wenn die Kondensatorspannung zwischen der ersten Schwelle und der zweiten Schwelle ist.

Bevorzugt arbeitet die Recheneinheit in einem ersten Betriebsmodus, wenn die Kondensatorspannung oberhalb der ersten Schwelle ist. Der erste Betriebsmodus kann auch als Normalmodus (Normal-Level) bezeichnet werden. In dem ersten Betriebsmodus ist die Funktionalität der Recheneinheit und/oder des Transponders nicht begrenzt.

Bevorzugt arbeitet die Recheneinheit in einem zweiten Betriebsmodus, wenn die Kondensatorspannung unterhalb der ersten Schwelle und oberhalb einer zweiten Schwelle ist. Der zweite Betriebsmodus kann auch als Warnmodus (Warn-Level) bezeichnet werden. Vorteilhafterweise ist in dem zweiten Betriebsmodus zumindest eine Begrenzung einer Stromentnahme aus dem Kondensator aktiviert. Vorteilhafterweise ist in dem zweiten Betriebsmodus zumindest eine Funktionalität des Transponders deaktiviert um die Stromentnahme aus dem Kondensator zu reduzieren. Vorzugsweise liest eine Firmware periodisch ein innerhalb der Recheneinheit programmiertes Statusregister, das den Betriebsmodus enthält. Vorteilhafterweise werden in Abhängigkeit von einem Wert des Statusregisters Peripherieschaltkreise des Transponders aktiviert beziehungsweise deaktiviert oder eine Taktfrequenz der Recheneinheit wird verändert.

Bevorzugt arbeitet die Recheneinheit in einem dritten Betriebsmodus, wenn die Kondensatorspannung unterhalb der zweiten Schwelle ist. Der dritte Betriebsmodus kann auch als Notbetriebsmodus (Ausschalt-Level) bezeichnet werden. Vorteilhafterweise ist in dem dritten Betriebsmodus der überwiegende Teil der Funktionalität des Transponders deaktiviert. Nur eine geringe Ladung ist in dem Kondensator verblieben. Die Recheneinheit wechselt vorteilhafterweise in einen Schlafzustand. Hierzu werden vorzugsweise die Routinen der Recheneinheit ausgesetzt. Die ausgesetzten Routinen an einer beliebigen Stellen innerhalb ihres Ablaufs - beispielsweise an der ausgesetzten Stelle oder einer anderen Stelle durch Rücksprung - fortgesetzt werden, wenn die Kondensatorspannung zumindest oberhalb der zweiten Schwelle ist.

Bevorzugt ist zusätzlich unterhalb der zweiten Schwelle eine dritte Schwelle vorgesehen. Vorzugsweise wird die Recheneinheit zurückgesetzt, wenn die Kondensatorspannung die dritte Schwelle unterschreitet (Reset-Level). Beispielsweise kann die Kondensatorspannung im dritten Betriebsmodus trotz der Deaktivierung des überwiegenden Teils der Funktionalität des Transponders durch eine sehr geringe Stromentnahme aus dem Kondensator weiter absinken und die dritte Schwelle unterschreiten. Vorteilhafterweise erfolgt dann ein Zurücksetzen der Recheneinheit, um undefinierte Zustände zu vermeiden. Steigt die Kondensatorspannung nach dem Zurücksetzen erneut an, wird die Recheneinheit zunächst initialisiert und danach werden alle Routinen neu begonnen.

Der Erfindung liegt weiterhin die Aufgabe zu Grunde, einen Transponder anzugeben, dessen Energieversorgung möglichst verbessert ist.

Diese Aufgabe wird durch einen Transponder mit den Merkmalen des unabhängigen Patentanspruchs 7 gelöst. Vorteilhafte Weiterbildungen sind Gegenstand von abhängigen Ansprüchen.

Demzufolge ist ein Transponder mit einem Sende-Empfangs-Schaltkreis, mit einem Kondensator, mit einer Recheneinheit und mit einem Vergleichsschaltkreis vorgesehen. Der Kondensator ist zum Laden mit dem Sende-Empfangs-Schaltkreis verbunden. Die Recheneinheit ist zur Energieversorgung mit dem Kondensator verbunden. Vorzugsweise ist die Recheneinheit direkt oder indirekt mit dem Sende-Empfangs-Schaltkreis zur Übertragung von Daten verbunden.

Der Vergleichsschaltkreis ist mit dem Kondensator verbunden. Weiterhin ist die Recheneinheit mit dem Vergleichsschaltkreis verbunden. Der Vergleichsschaltkreis ist eingerichtet eine Kondensatorspannung des Kondensators mit einer ersten Schwelle und mit einer von der ersten Schwelle verschiedenen zweiten Schwelle zu vergleichen. Bevorzugt ist die Kondensatorspannung als Eingangsgröße an einen Eingang des Vergleichsschaltkreises anlegbar.

In einer vorteilhaften Weiterbildung weist die erste Schwelle und/oder die zweite Schwelle eine Hysterese auf. Vorzugsweise weist der Vergleichsschaltkreis für die erste Schwelle einen ersten Fensterkomparator oder Schmitt-Trigger und/oder für die zweite Schwelle einen zweiten Fensterkomparator oder Schmitt-Trigger auf. Die Hysterese weist ein Spannungsfenster in Bezug auf die Kondensatorspannung auf, in dem der Betriebsmodus nicht verändert wird. Wird beispielsweise für die erste Schwelle deren unterer Hystereselevel unterschritten, wechselt die Recheneinheit beispielsweise von dem ersten Betriebsmodus in den zweiten Betriebsmodus. Steigt danach die Kondensatorspannung beispielsweise geringfügig an, wobei der obere Hystereselevel der ersten Schwelle noch nicht überschritten wird, so verbleibt die Recheneinheit im zweiten Betriebsmodus. Erst mit Überschreiten des oberen Hystereselevels durch die Kondensatorspannung erzeugt der Vergleichsschaltkreis ein Signal, dass beispielsweise den Programmablauf der Recheneinheit unterbricht, so dass die Recheneinheit zurück in den ersten Betriebsmodus wechseln kann.

Die Recheneinheit ist vorzugsweise eingerichtet eine Anzahl von Routinen mit unterschiedlicher Priorisierung innerhalb ihres Programmablaufs auszuführen.

Gemäß einer bevorzugten Weiterbildung ist die Recheneinheit eingerichtet in Abhängigkeit von einem Ausgangssignal des Vergleichsschaltkreises eine Anzahl von Routinen mit niedriger Priorisierung zu stoppen und eine Anzahl von Routinen mit hoher Priorisierung fortzuführen. Alternativ oder in Kombination zum Stoppen der Routinen mit niedriger Priorisierung ist in einer anderen vorteilhaften Weiterbildung die Rechneinheit eingerichtet in Abhängigkeit von dem Ausgangssignal des Vergleichsschaltkreises periphere Schaltkreise von der Stromversorgung aus dem Kondensator abzuschalten oder die Frequenz des Taktsignals der Recheneinheit zu reduzieren.

In einer vorteilhaften Weiterbildung weist der Transponder zusätzlich eine Batterie und einen Schalter auf. Der Schalter ist mit der Batterie und mit dem Kondensator zum Umschalten der Energieversorgung zwischen Batterie und Kondensator verbunden. Die Batterie ist beispielsweise aufladbar.

Vorzugsweise ist die Recheneinheit zur Steuerung der Umschaltung der Energieversorgung in Abhängigkeit von einem Ausgangssignal des Vergleichsschaltkreises eingerichtet. Alternativ kann zur Steuerung der Umschaltung auch ein weiterer Teilschaltkreis des Transponders vorgesehen sein.

Gemäß einer besonders bevorzugten Weiterbildung sind die erste Schwelle und/oder die zweite Schwelle des Vergleichsschaltkreises einstellbar. Die Einstellung kann dabei durch ein Signal über den Sende-Empfangs-Schaltkreis oder durch eine Steuerung der Recheneinheit erfolgen. Vorzugsweise erfolgt die Einstellung der ersten und/oder zweiten Schwelle dynamisch beispielsweise in Abhängigkeit von Randbedingung des Transponders. Vorteilhafterweise ist auch eine selbstlernende Einstellung, beispielsweise mittels Auswertung durch die Recheneinheit möglich.

In einer anderen Weiterbildung ist vorgesehen, dass die Recheneinheit zur Einstellung der ersten Schwelle und/oder der zweiten Schwelle ausgebildet und mit einem Steuereingang des Vergleichsschaltkreises verbunden ist.

Vorzugsweise weist der Vergleichsschaltkreis einen Multiplexer auf. Ein erster Eingang des Multiplexers ist mit dem Kondensator und ein zweiter Eingang des Multiplexers ist mit einer Batterie, insbesondere zur Messung der Batteriespannung, verbunden.

Die zuvor beschriebenen Weiterbildungsvarianten sind sowohl einzeln als auch in Kombination besonders vorteilhaft. Dabei können sämtliche Weiterbildungsvarianten untereinander auch unter verschiedenen Anspruchskategorien kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: eine schematische Darstellung eines Transpondersystems,
- Fig. 2: ein schematisches Diagramm, und

- Fig. 3: einen schematischen Verfahrensablauf.

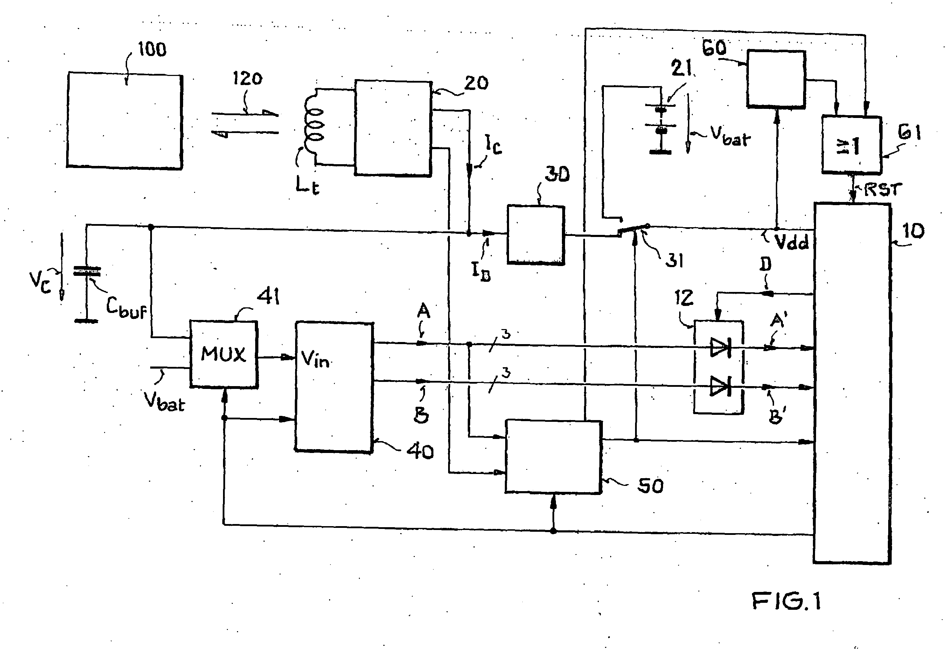

In Fig. 1 ist ein vereinfachte schematische Darstellung eines Transponders dargestellt. Zudem ist eine Basisstation 100 dargestellt, die mit dem Transponder über eine Luftschnittstelle verbindbar ist. Hierzu sendet die Basisstation 100 ein magnetisches Wechselfeld 120, das von dem Sende-Empfangs-Schaltkreis 20 mit einer Transponderspule Lₜ empfangbar ist. Die empfangene Energie des magnetischen Wechselfeldes 120 wird in einen Ladestrom I_{C} gewandelt, der einen Kondensator C_{buf} auflädt. Hingegen wird der Kondensator C_{buf} durch den Entladestrom I_{D} entladen. Das magnetische Wechselfeld 120 dient zudem der bidirektionalen Datenübertragung zwischen dem Transponder und der Basisstation 100.

Der Entladestrom I_{D} dient der Versorgung einer Recheneinheit 10 und weiterer Teilschaltkreises 12, 20, 30, 31, 40, 41, 50 mit elektrischer Energie. Hierzu ist ein mit dem Kondensator C_{buf} verbundener Spannungsregler 30 vorgesehen, der an seinem Ausgang eine Versorgungsspannung Vdd bereitstellt. Zur Versorgung der Recheneinheit 10 als Hauptstromverbraucher ist der Spannungsregler 30 über einen Schalter 31 mit dem Versorgungsspannungsanschluss der Recheneinheit 10 verbunden. Die Recheneinheit 10 ist beispielsweise ein Rechenkern eines Mikrocontrollers.

Übersteigt der Ladestrom I_{C} den Entladestrom I_{D} wird der Kondensator C_{buf} geladen, so dass die Kondensatorspannung V_{C} steigt. Übersteigt hingegen der Entladestrom I_{D} den Ladestrom I_{C} wird der Kondensator C_{buf} entladen, so dass die Kondensatorspannung V_{c} fällt. Die Kondensatorspannung V_{c} hängt somit von der Differenz zwischen Ladestrom I_{C} und Entladestrom I_{D} ab. Ist die Kondensatorspannung V_{C} zu niedrig kann die Recheneinheit 10 die Programmroutinen eines Programmablaufs nicht mehr zuverlässig abarbeiten. Die Fehlerhäufigkeit steigt mit abnehmender Kondensatorspannung V_{C} an und kann zum Abbruch des Programmablaufs und zum Zurücksetzen der Recheneinheit 10 führen. Nicht gespeicherte Registerwerte der Recheneinheit 10 gehen beim Zurücksetzen verloren.

Um die Verfügbarkeit der Recheneinheit der Fig. 1 zu erhöhen weist der Transponder einen Vergleichsschaltkreis 40 auf. Der Vergleichsschaltkreis 40 weist beispielsweise eine Anzahl von Komparatoren auf. Eine Eingangsspannung Vᵢₙ des Vergleichsschaltkreises 40 wird durch den Vergleichsschaltkreis mit einer ersten Schwelle und einer zweiten Schwelle verglichen. Dabei sind die erste Schwelle und die zweite Schwelle unterschiedlich. Die erste Schwelle und die zweite Schwelle sind im Ausführungsbeispiel der Fig. 1 einstellbar. Zur Überwachung der Kondensatorspannung V_{C} sind die erste Schwelle und die zweite Schwelle jeweils in einem Spannungsbereich der Kondensatorspannung V_{C} eingestellt in welchem die Recheneinheit 10 noch zuverlässig arbeitet. Vorteilhafterweise weist die erste Schwelle und/oder die zweite Schwelle eine Hysterese auf, um ständig wechselnde Zustände bei einem Schwanken der Kondensatorspannung V_{C} im Bereich der jeweiligen Schwelle zu vermeiden.

Für die Recheneinheit 10 des Ausführungsbeispiels der Fig. 1 sind mehrere Betriebsmodi definiert. Die Betriebsmodi ermöglichen den überraschenden Effekt, dass die Stromentnahme während eines Betreiben des Transponders als passiven Transponder optimiert werden kann, indem spezifische Funktionalitäten des Transponders während des Betriebs selektiv aktiviert bzw. deaktiviert werden. Die Aktivierung bzw. Deaktivierung ist dabei von der Kondensatorspannung V_{C} des Kondensators C_{buf} abhängig. Einer oder mehrere Betriebsmodi für eine reduzierte Stromentnahme für passive Transponderanwendungen dienen als frühzeitige Indikatoren und Warnungen für die in der Recheneinheit 10 ablaufende Software vor einer gefährlich niedrige Versorgungsspannung Vdd bevor die Kondensatorspannung V_{c} unter eine Rücksetzschwelle sinkt. Bei einem Rücksetzen gehen alle derzeit in der Recheneinheit 10 ermittelten Werte verloren. Ein Rücksetzen der Recheneinheit 10 ist unerwünscht, da das Rücksetzen die Recheneinheit 10 zwingt Initialisierungsroutinen neu zu starten und zu dem Ausgangszustand zurückzukehren. Dies wiederum erfordert, dass die Basisstation 100 erneut ein Initialisierungsignal an den Transponder sendet um die Datenübertragung von Anfang an zu beginnen.

Im Ausführungsbeispiel der Fig. 1 ist der Vergleichsschaltkreis 40 über einen schaltbaren Inverter 12 mit Eingängen der Recheneinheit 10 verbunden, die eine Unterbrechung des Programmablaufs in der Recheneinheit 10 ermöglichen. Der ersten-Schwelle ist dabei das Ausgangssignal A und der zweiten Schwelle das Ausgangssignal B zugeordnet. Durch den schaltbaren Inverter 12 kann in Abhängigkeit von dem Steuersignal D das Ausgangssignal A invertiert oder nicht invertiert werden.

Durch den schaltbaren Inverter 12 kann in Abhängigkeit von dem Steuersignal D das Ausgangssignal B invertiert oder nicht invertiert werden. Die geschalteten Ausgangssignale A' beziehungsweise B' liegen an den Eingängen der Recheneinheit 10 an. Im Ausführungsbeispiel der Fig. 1 sind die Verbindungen zwischen dem Vergleichsschaltkreis 40 und der. Recheneinheit 10 dreifach ausgeführt, so dass drei Eingangssignale Vᵢₙ in drei Kanälen zeitgleich mit gleichen oder unterschiedlichen ersten und zweiten Schwellen überwacht werden können.

Weiterhin ist der Vergleichsschaltkreis 40 mit zumindest einem Ausgang der Recheneinheit 10 verbunden. Der Vergleichsschaltkreis 40 ist mit einstellbaren Schwellen ausgebildet, so dass zumindest eine Schwelle durch die Recheneinheit 10 einstellbar und insbesondere im Betrieb des Transponders änderbar ist.

Der Vergleichschaltkreis 40 kann weiterhin einen Multiplexer 41 aufweisen um mehrere zu überwachende Spannungen auf den Eingang Vᵢₙ zu schalten. In dem Ausführungsbeispiel der Fig. 1 ist ein Eingang des Multiplexers 41 mit dem Kondensator C_{buf} und ein weiterer Eingang mit einer Batterie 21 verbunden, so dass auch die Batteriespannung V_{bat} überwacht werden kann. Zusätzlich kann eine Anzahl weiterer Eingänge des Multiplexers 41 vorgesehen sein. Beispielsweise kann eine zur Amplitude des magnetischen Wechselfeldes proportionale Spannung überwacht werden (in Fig. 1 nicht dargestellt). In einer weiteren Ausführungsvariante (nicht dargestellt in Fig. 1) ist die Batterie 21 zu Aufladung der Batterie 21 mit dem Kondensator C_{buf} verbindbar. Die Verbindung erfolgt vorteilhafterweise in Abhängigkeit von dem aktuellen Betriebsmodus. Beispielsweise wird die Batterie 21 nur geladen, wenn die Kondensatorspannung V_{C} oberhalb der ersten Schwelle ist, da dann eine ausreichende Energieübertragung von der Basisstation 100 zum Transponder gewährleistet ist.

Der Schalter 31 des Ausführungsbeispiels der Fig. 1 ist mit der Batterie 21 und dem Spannungsregler 30 verbunden und ermöglicht ein Umschalten zwischen einer Stromversorgung aus dem Kondensator C_{buf} beziehungsweise dem Ladestrom I_{C} und einer Stromversorgung aus der Batterie V_{bat}. Der Schalter 31 ist beispielsweise durch zwei wechselweise einschaltbare Feldeffekttransistoren gebildet. Zur Ansteuerung des Schalters 31 ist ein Kontrollschaltkreis 50 vorgesehen, dessen Ausgang mit dem Schalter 31 und zum Auslesen des Schaltzustands mit der Recheneinheit 10 verbunden ist. Weiterhin sind Eingänge des Kontrollschaltkreises 50 mit der Recheneinheit 10 und/oder dem Ausgang des Vergleichsschaltkreises 40 verbunden.

Ein weiterer Eingang des Kontrollschaltkreises 50 ist mit dem Sende-Empfangs-Schaltkreis 20 verbunden. Dies ermöglicht, dass der dem Sende-Empfangs-Schaltkreis 20 den Schalter 31 schaltet, wenn die Übertragung aktiv ist und die empfangene Energie für den Programmablauf in der Recheneinheit 10 ausreicht. Die Verbindung des Kontrollschaltkreises 50 mit der Recheneinheit 10 ermöglicht es, dass die Software der Recheneinheit 10 den Schalter 31 direkt steuert, wenn der Betriebsmodus identifiziert ist.

Weiterhin ist der Kontrollschaltkreise 50 derart mit dem Vergleichsschaltkreis 40 verbunden, dass mittels eines Signals der Vergleichsschaltkreis 40 direkt zwischen Kondensatorspannung V_{C} und Batteriespannung V_{bat} umgeschaltet wird. Diese Funktion ist nur aktiviert, wenn die Batteriespannung V_{bat} zur Verfügung steht.

Eine Rücksetzlogik 60 ist über ein Oder-Gatter 61 mit einem Reseteingang RST der Recheneinheit 10 verbunden. Ist die Spannungsversorgung Vdd der Recheneinheit 10 zu niedrig, so dass undefinierte Zustände entstehen können, wird die Recheneinheit 10 zurückgesetzt, indem die Rücksetzlogik 60 über das Oder-Gatter 61 ein Rücksetzsignal an den Reseteingang RST der Recheneinheit 10 anlegt. Danach wird die Recheneinheit 10 neu initialisiert und alle Routinen werden neu gestartet. Ebenfalls die Datenübertragung mit der Basisstation 100 muss von vorne gestartet werden. Ebenfalls ist das Oder-Gatter 61 mit dem Kontrollschaltkreis 50 verbunden, so dass durch ein Eingangssignal am Kontrollschaltkreis 50 durch die Recheneinheit 10 selbst und/oder durch den Vergleichsschaltkreis 40 und/oder durch den Sende-Empfangs-Schaltkreis 20 ein Rücksetzen der Recheneinheit 10 initiiert werden könnte.

Die Erfindung ist dabei nicht auf die dargestellte Ausgestaltung des Transponders in Fig. 1 beschränkt. Die Erfindung umfasst eine Vielzahl von verschiedenen Abwandlungen. Beispielsweise kann die Batterie 21, der Spannungsregler 30, der Schalter 31, der Kontrollschaltkreis 50, der Inverter 12, das Oder-Gatter 61, die Rücksetzlogik 60 und/oder der Multiplexer 41 fortgelassen werden. Alternativ zu Fig. 1 können feste, nicht einstellbare Schwellen verwendet werden.

Die Funktionalität des Transponder-Schaltkreises gemäß Fig. 1 kann besonders vorteilhaft für einen Kraftfahrzeugschlüssel verwendet werden, wobei Übertragungsbedingungen für das magnetische Wechselfeld 120 mit der Zeit stark variiert.

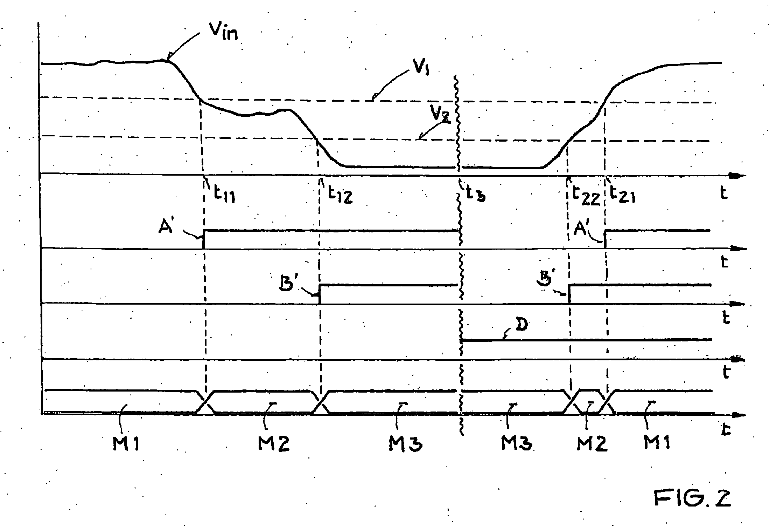

In Fig. 2 ist ein Diagramm mit einer Funktionalität einer Spannungs-überwachung für einen Transponder durch die Abbildung mehrerer Signalverläufe schematisch dargestellt. Die Größen Vᵢₙ, A', B' und D beziehen sich auf die korrespondierenden Größen in Fig. 1. Alternativ kann jedoch auch ein anderer als der in Fig. 1 dargestellte. Transponder-Schaltkreis mit einer in Fig. 2 dargestellten Funktionalität verwendet werden.

Im oberen Teil des Diagramms ist der Verlauf der zu vergleichenden Eingangsspannung Vᵢₙ in Bezug zu einer ersten Schwelle V₁ und einer zweiten Schwelle V₂ dargestellt. Auf der Abszisse ist bezüglich aller Signale die Zeit aufgetragen.

Von Beginn der Darstellung bis zum Zeitpunkt t₁₁ ist die Spannung Vᵢₙ oberhalb der ersten Schwelle V₁. Die Recheneinheit 10 arbeitet im zugehörigen ersten Betriebsmodus M1 eine Anzahl von Routinen im Programmablauf ab, wobei die Routinen eine unterschiedliche Priorisierung aufweisen.

Zum Zeitpunkt t₁₁ unterschreitet die Spannung Vᵢₙ die erste Schwelle V₁. Das Signal A' wechselt vom Wert Low auf den Wert High. Die positive Flanke des Signals A' löst eine Unterbrechung des Programmablauf in der Recheneinheit 10 aus. Aufgrund dieser Unterbrechung wechselt die Recheneinheit 10 in einen zweiten Betriebsmodus M2. Der zweite Betriebsmodus M2 kann auch als Niedrigleistungsmodus bezeichnet werden. In diesem zweiten Betriebsmodus M2 werden eine Anzahl von Routinen mit niedriger Priorisierung gestoppt und eine Anzahl von Routinen mit hoher Priorisierung fortgeführt. Es wird daher zumindest eine Routine niedriger Priorisierung gestoppt und zumindest eine Routine hoher Priorisierung fortgeführt.

Routinen hoher Priorisierung sind beispielsweise Routinen, deren Registerwerte gesichert werden müssen. Diese Registerwerte werden benötigt um nach einem Spannungseinbruch - wenn die Kondensatorspannung Vₗₙ wieder ausreicht die Routinen fortzuführen - die gespeicherten Registerwerte wieder in Register einzulesen und den Programmablauf fortzusetzen. Dies bewirkt den überraschenden Effekt, dass eine Kommunikation auch nach einem Verbindungsabbruch nicht erneut vollständig durchgeführt werden muss, sondern ein Fortsetzen der Kommunikation entsprechend dem Zustand vor dem Verbindungsabbruch ermöglicht wird.

Im Gegensatz zu Routinen hoher Priorisierung werden Routinen niederer Priorisierung gestoppt. Dies bewirkt den überraschenden Effekt, dass die Zeitspanne, in der eine zuverlässige Abarbeitung der Programmroutinen des Programmablaufs möglich ist, verlängert wird. Dies wird erzielt, indem die Kondensatorspannung V_{C} auch ohne einen Ladestrom I_{C}, d.h. ohne magnetisches Wechselfeld, langsamer sinkt. Die Fehlerhäufigkeit wird reduziert. Durch die Priorisierung der Routinen und das Stoppen von Routinen niederer Priorität kann die Stromentnahme aus dem Kondensator C_{buf} durch die Recheneinheit 10 überraschenderweise deutlich reduziert werden. Hierdurch verlängert sich die Zeitdauer zwischen den zwei Zeitpunkten t₁₁ und t₁₂ und somit die Länge des Betriebsmodus M2.

Zum Zeitpunkt t₁₂ unterschreitet die Spannung Vᵢₙ die zweite Schwelle V₂, so dass das Signal B' von einem Low-Wert auf einen High-Wert wechselt. Die positive Flanke des Signals B' führt wiederum zu einer Unterbrechung des Programmablaufs. Die Recheneinheit 10 wechselt in einen dritten Betriebsmodus M3. Dieser dritte Betriebsmodus M3 kann auch als Schlafmodus bezeichnet werden. Die Eingangsspannung Vᵢₙ kann in dem dritten Betriebsmodus M3 soweit absinken, dass keine Operation in der Recheneinheit 10 mehr erfolgen kann oder es können in der Recheneinheit 10 undefinierte Zustände entstehen. In diesem Fall kann ein Rücksetzen (engl. reset) erfolgen, so dass alle Registerwerte in der Recheneinheit 10 gelöscht werden. Um nachfolgend ein Ansteigen der Eingangsspannung Vᵢₙ ebenfalls durch positive Flanken detektieren zu können, wird zum Zeitpunkt t₃ mit dem Signal D der schaltbare Inverter 12 geschaltet, so dass das Signal A' nun zum Signal A invertiert ist und so dass das Signal B' nun zum Signal B invertiert ist. Alternativ zum Ausführungsbeispiel der Fig. 1 und Fig. 2 könnten auch fallende Flanken der Signal A und B zur Unterbrechung des Programmablaufs in der Recheneinheit 10 genutzt werden.

Steigt zum Zeitpunkt t₂₂ im Ausführungsbeispiel der Fig. 2 die Eingangsspannung Vᵢₙ über die zweite Schwelle V₂ an, werden in dem nun erneut gestarteten zweiten Betriebsmodus M2 Routinen mit hoher Priorität erneut gestartet. Um jedoch aufgrund der niedrigen Eingangsspannung Vᵢₙ nur einen geringen Strom aus dem Kondensator C_{buf} zu entnehmen, werden Routinen mit niedriger Priorität nicht gestartet, so dass die Stromaufnahme durch die Recheneinheit 10 gegenüber dem ersten Betriebsmodus M1 weiterhin reduziert ist.

Zum Zeitpunkt t₂₁ steigt die Eingangsspannung Vᵢₙ wieder über die erste Schwelle V₁ an. Die Recheneinheit 10 kann nachfolgend im Betriebsmodus M1 wiederum alle Routinen hoher und niedriger Priorität starten. Das Signal D wird im ersten Betriebsmodus M1 wiederum auf einen Low-Wert gesetzt (nicht dargestellt).

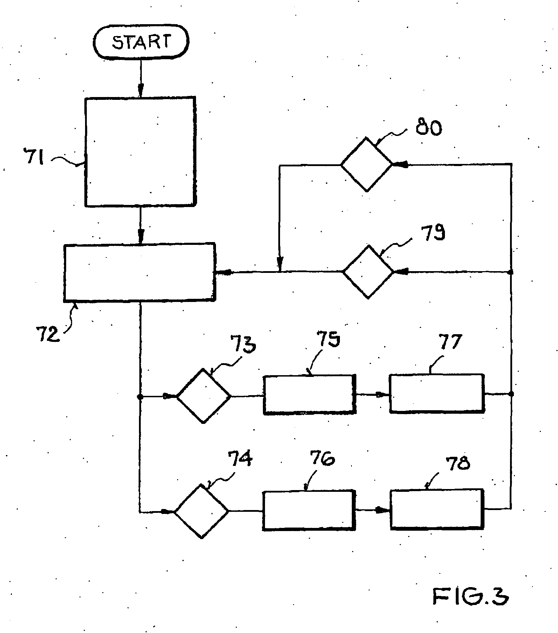

Fig. 3 zeigt ein vereinfachtes schematisches Flussdiagramm eines Programmablaufs in der Recheneinheit 10 mit Überwachung der Kondensatorspannung V_{C}. Nach einem Start wird im Programmteil 71 der Kondensator C_{buf} geladen und der Dateneingang am Transponder überprüft. Die Recheneinheit 10 wird zurückgesetzt und eine Initialisierungsroutine gestartet. Zu Beginn des Programmablaufs der Recheneinheit 10 wird die Überwachung der Kondensatorspannung V_{c} gestartet. Anschließend werden im Programmteil 72 in einem ersten Betriebsmodus alle Routinen höherer und niederer Priorisierung gestartet. Mit Unterschreiten einer ersten Schwelle wird ein erstes Unterbrechungssignal 73 erzeugt und der Programmfluss unterbrochen. Die feste oder dynamische Adresse der Unterbrechungsroutine wird geladen. Nachfolgend wird der Programmfluss in einem zweiten Betriebsmodus im Programmteil 71 fortgesetzt.

Wird hingegen die zweite Schwelle unterschritten, wird ein zweites Unterbrechungssignal 74 erzeugt und die feste oder dynamische Adresse der Unterbrechungsroutine wird geladen. Im Programmteil 77 wird die Recheneinheit 10 in einen dritten Betriebsmodus - einen Schlafmodus - versetzt. In dem dritten Betriebsmodus können nach der Abarbeitung der letzten Befehle alle Routinen aussetzen, um diese bei wiederhergestellter Spannungsversorgung fortzusetzen.

Durch das Unterbrechungssignal 79, das einem Überschreiben der ersten Schwelle zugeordnet ist, oder durch das Unterbrechungssignal 80, das einem Überschreiben der zweiten Schwelle zugeordnet ist, gelangt der Programmfluss wieder in den Programmteil 72, mit der Ausführung der höher priorisierten Routinen und der nieder priorisierten Routinen zurück.

Die Erfindung ist dabei nicht auf das Ausführungsbeispiel eines Verfahrensablaufs nach Fig. 3 beschränkt. So lassen sich für den Fachmann leicht andere Programmflüsse ableiten, die dennoch die Überwachungsfunktion der zwei Schwellen für die drei Betriebsmodi aufweisen. Beispielsweise können den vier Unterbrechungssignalen auch vier unterschiedliche und variable Schwellen in Abhängigkeit von der Adresse innerhalb des Programrnflusses dynamisch zugeordnet werden. Auch ist es möglich über die zwei Schwellen hinaus weitere Schwellen vorzusehen, um beispielsweise die Stromentnahme durch die Recheneinheit in mehreren Abstufungen zu steuern.

### Bezugszeichenliste

- 10: Recheneinheit
- 12: schaltbarer Inverter
- 20: Sende-Empfangs-Schaltkreis
- 21: Batterie
- 30: Spannungsregler
- 31: Schalter
- 40: Vergleichsschaltkreis, Komparator
- 41: Multiplexer des Vergleichsschaltkreises
- 50: Kontrollschaltkreis für den Schalter
- 60: Rücksetzlogik
- 61: Oder-Gatter
- 71, 72, 75, 76, 77. 78: Teil eines Programmablaufs
- 73, 74, 79, 80: Unterbrechungssignal (IRQ)
- 100: Basisstation
- 120: Transponderverbindung, Luftschnittstelle
- Lₜ: Spule des Sende-Empfangs-Schaltkreises
- C_{buf}: Kondensator, Energiespeicher
- V_{bat}: Batteriespannung
- V_{C}: Kondensatorspannung
- V₁: erste Schwelle
- V₂: zweite Schwelle
- Vᵢₙ: Eingangsspannung des Vergleichsschaltkreises
- I_{C}: Ladestrom
- I_{D}: Entladestrom
- Vdd: Versorgungsspannung/Versorgungsspannungseingang
- A, B: Ausgangssignal des Vergleichsschaltkreises
- A', B': Ausgangssignal des Vergleichsschaltkreises nach dem schaltbaren Inverter
- D: Steuersignal

- M1, M2, M3: Betriebsmodus
- t11, t12, t3, t22, t21: Zeitpunkt

## Patentansprüche

1. Verfahren zum Betrieb eines Transponders, der einen Kondensator (C_{buf}) zur Speicherung von über eine Luftschnittstelle übertragener Energie und eine mit der gespeicherten Energie versorgbare Recheneinheit (10) aufweist,
- bei dem eine Kondensatorspannung (V_{C}) des Kondensators (C_{buf}) mit einer ersten Schwelle (V₁) verglichen wird,
- bei dem die Kondensatorspannung (V_{C}) mit einer zweiten Schwelle (V₂) verglichen wird, wobei sich die erste Schwelle (V₁) und die zweite Schwelle (V₂) unterscheiden,
- bei dem in einem ersten Betriebsmodus (M1), wenn die Kondensatorspannung (V_{C}) oberhalb der ersten Schwelle (V₁) ist, die Recheneinheit (10) eine Anzahl von Routinen mit unterschiedlicher . Priorisierung ausführt,
- bei dem in einem zweiten Betriebsmodus (M2), wenn die Kondensatorspannung (V_{C}) zwischen der ersten Schwelle (V₁) und der zweiten Schwelle (V₂) ist, eine Anzahl von Routinen mit niedriger Priorisierung gestoppt und eine Anzahl von Routinen mit hoher Priorisierung fortgeführt werden.

2. Verfahren nach Anspruch 1, bei dem in einem dritten Betriebmodus (M3), wenn die Kondensatorspannung (V_{C}) unterhalb der zweiten Schwelle (V₂) ist, ein Aussetzen der Routinen der Recheneinheit (10) erfolgt.

3. Verfahren nach Anspruch 2, bei dem zumindest die zuvor ausgesetzten Routinen fortgesetzt werden, wenn die Kondensatorspannung (V_{C}) erneut oberhalb der ersten Schwelle (V₁) oder oberhalb der zweiten Schwelle (V₂) ist.

4. Verfahren nach einem der vorhergehenden Ansprüche, bei dem ein Unterschreiten und/oder Überschreiten der ersten Schwelle (V₁) durch die Kondensatorspannung (V_{C}) ein erstes Unterbrechungssignal (73, 79) zur Unterbrechung des Programmablaufs in der Recheinheit (10) auslöst.

5. Verfahren nach einem der vorhergehenden Ansprüche, bei dem ein Unterschreiten und/oder Überschreiten der zweiten Schwelle (V₂) durch die Kondensatorspannung (V_{C}) ein zweites Unterbrechungssignal (74, 80) zur Unterbrechung des Programmablaufs in der Recheinheit (10) auslöst.

6. Verwendung von einer ersten Schwelle (V₁) und einer von der ersten Schwelle (V₁) verschiedenen zweiten Schwelle (V₂) zur Überwachung einer Kondensatorspannung (V_{C}) eines Kondensators (C_{buf}) eines Transponders, der eine Recheneinheit (10) aufweist, die mit in dem Kondensator (C_{buf}) gespeicherter Energie versorgbar ist, wobei die Recheneinheit (10) zur Reduzierung der Stromaufnahme ausgebildet ist, wenn die Kondensatorspannung (V_{c}) zwischen der ersten Schwelle (V₁) und der zweiten Schwelle (V₂) ist.

7. Transponder,
- mit einem Sende-Empfangs-Schaltkreis (20),
- mit einem Kondensator (C_{buf}), der zum Laden mit dem Sende-Empfangs-Schaltkreis (20) verbunden ist,
- mit einer Recheneinheit (10), die zur Energieversorgung mit dem Kondensator (C_{buf}) verbunden ist, und
- mit einem Vergleichsschaltkreis (40, 41), der mit dem Kondensator (C_{buf}) verbunden ist,
- bei dem der Vergleichsschaltkreis (40, 41) eingerichtet ist eine Kondensatorspannung (V_{C}) des Kondensators (C_{buf}) mit einer ersten Schwelle (V₁) und mit einer von der ersten Schwelle (V₁) verschiedenen zweiten Schwelle (V₂) zu vergleichen,
- bei dem die Recheneinheit (10) eingerichtet ist eine Anzahl von Routinen mit unterschiedlicher Priorisierung auszuführen, und
- bei dem die Recheneinheit (10) mit dem Vergleichsschaltkreis (40, 41) verbunden ist.

8. Transponder nach Anspruch 7, bei dem die Recheneinheit (10) eingerichtet ist in Abhängigkeit von einem Ausgangssignal (A, B, A', B') des Vergleichsschaltkreises (40, 41) eine Anzahl von Routinen mit niedriger Priorisierung zu stoppen und eine Anzahl von Routinen mit hoher Priorisierung fortzuführen.

9. Transponder nach einem der vorhergehenden Ansprüche,
- mit einer Batterie (21) und
- mit einem Schalter (31), der mit der Batterie (21) und mit dem Kondensator (C_{buf}) zum Umschalten der Energieversorgung zwischen Batterie (21) und Kondensator (C_{buf}) verbunden ist.

10. Transponder nach Anspruch 9, bei dem die Recheneinheit (10) zur Steuerung der Umschaltung der Energieversorgung in Abhängigkeit von einem Ausgangssignal (A, B, A', B') des Vergleichsschaltkreises (40, 41) eingerichtet ist.

11. Transponder nach einem der vorhergehenden Ansprüche, bei dem die erste Schwelle (V₁) und/oder die zweite Schwelle (V₂) einstellbar sind.

12. Transponder nach Anspruch 11, bei dem die Recheneinheit (10) zur Einstellung der ersten Schwelle (V₁) und/oder der zweiten Schwelle (V₂) ausgebildet und mit einem Steuereingang des Vergleichsschaltkreises (40, 41) verbunden ist.

13. Transponder nach einem der vorhergehenden Ansprüche, bei dem der Vergleichsschaltkreis einen Multiplexer (41) aufweist, wobei ein erster Eingang des Multiplexers (41) mit dem Kondensator (C_{buf}) und ein zweiter Eingang des Multiplexers (41) mit einer Batterie (21) verbunden ist.
